# EUROPÄISCHE PATENTSCHRIFT

(11) **EP 3 835 121 B1**
(45) Veröffentlichungstag und Bekanntmachung des Hinweises auf die Patenterteilung: **07.09.2022**
(21) Anmeldenummer: 20000444.8
(22) Anmeldetag: 09.12.2020
(51) Int. Cl.: B60N 2/39, B60N 2/50

(54) **FAHRZEUGSITZ MIT EINER FEDEREINHEIT ZUM FEDERN VON WANK- UND VERTIKALFEDERBEWEGUNG**
VEHICLE SEAT WITH A SPRING UNIT FOR SUSPENDING ROLL AND VERTICAL MOVEMENT
SIÈGE DE VÉHICULE DOTÉ D'UNE UNITÉ DE RESSORT PERMETTANT DE FAIRE RESSORT DU MOUVEMENT DE ROULIS ET DE RESSORT VERTICAL

(30) Priorität: 13.12.2019 DE 102019134234
(43) Veröffentlichungstag der Anmeldung: 16.06.2021
(73) Patentinhaber: GRAMMER AG, 92289 Ursensollen (DE)
(72) Erfinder: Dotzler, Florian, 92242 Hirschau (DE); Krivenkov, Konstantin, 92224 Amberg (DE)
(74) Vertreter: Hannke Bittner & Partner

(56) Entgegenhaltungen:
- EP-A1- 3 181 396
- EP-A1- 3 680 129
- EP-A2- 2 463 146
- WO-A1-2009/054788
- DE-A1-102018 112 004
- FR-A- 912 187
- US-A1- 2014 316 661

## Beschreibung

Die Erfindung betrifft einen Fahrzeugsitz mit einer Federeinheit zum Federn von Wank- und Vertikalfederbewegungen des Fahrzeugs, wobei der Fahrzeugsitz ein Fahrzeugsitzoberteil und ein Fahrzeugsitzunterteil aufweist, wobei das Fahrzeugsitzoberteil und das Fahrzeugsitzunterteil mittels der Federeinheit verbunden sind, sodass das Fahrzeugsitzoberteil und das Fahrzeugsitzunterteil relativ zueinander bewegbar sind, wobei die Federeinheit eine Scherenanordnung mit einem ersten Scherenarm und einem zweiten Scherenarm aufweist. Fahrzeugsitze mit Wank- und Vertikalfederungen sind auf dem Stand der Technik bekannt, beispielsweise ist aus der WO 2014/176130 A eine Wankfederung bekannt, welche Wankbewegungen des Fahrzeugs beziehungsweise des Fahrzeugsitzes abfedern kann. Eine derartige Wankbewegung, wie im Stand der Technik dargestellt, ist jedoch konstruktiv sehr aufwendig umzusetzen, erfordert viele aktiv gesteuerte Komponenten und beansprucht einen großen Bauraum. EP 2463146 zeigt eine Fahrzeugschwingungsvorrichtung zur Kompensation der Wankbewegung und ein Scherengestell zur Federung der Vertikalbewegung eines Fahrzeugsitzes.

Es ist daher Aufgabe der vorliegenden Erfindung, einen Fahrzeugsitz mit einer Federeinheit zum Federn von Wank- und Vertikalfederbewegungen bereitzustellen, welche konstruktiv einfacher als im Stand der Technik dargestellt ausgebildet ist und welche einen verbesserten Schwingungskomfort für die auf dem Fahrzeugsitz sitzende Person aufweist.

Die zugrundeliegende Aufgabe der vorliegenden Anmeldung wir durch einen Fahrzeugsitz mit den Merkmalen der Patentansprüche 1, 10 oder 11 gelöst.

Kerngedanke der vorliegenden Erfindung ist es, einen Fahrzeugsitz mit einer Federeinheit zum Federn von Wank- und Vertikalbewegungen des Fahrzeugs mit den Merkmalen des Anspruchs 1 oder 11 bereitzustellen.

Bevorzugt ist das erste Federelement in einem ersten Winkel zu einer Fahrzeugsitzbreitenrichtung und in einem zweiten Winkel zu einer Fahrzeugsitzhöhenrichtung angeordnet. Bevorzugt stehen der erste Winkel und der zweite Winkel derart in Verbindung, dass der zweite Winkel 90° - erster Winkel entspricht.

Unter einer Wankbewegung versteht sich hierbei eine Rotationsbewegung des Fahrzeugsitzes um eine Drehachse, welche in Fahrzeugsitzlängsrichtung verlaufend angeordnet ist.

Besonders bevorzugt ist daher die erste Drehachse parallel zu der Fahrzeugsitzlängsrichtung angeordnet.

Gemäß einer bevorzugten Ausführungsform ist es auch vorgesehen, dass das Fahrzeugsitzoberteil und das Fahrzeugsitzunterteil mittels der Federeinheit relativ zueinander federbar bzw. bewegbar bzw. verlagerbar sind.

Gemäß einer besonders bevorzugten Ausführungsform ist das erste Federelement bevorzugt eines ausgewählt aus einer Luftfeder und einer mechanischen Feder. Dieses gilt auch für mögliche weitere Federelemente.

Durch die Verschiebung des Verschiebeelements wird erfindungsgemäß durch die Verbindung des Federelements zu dem Verschiebeelement das Federelement in seiner Position im Raum bewegt. Das Federelement weist beispielsweise ein erstes Ende und ein zweites Ende auf, wobei das erste Ende mit dem Federelementträger und das zweite Ende mit dem Verschiebeelement verbunden ist. Durch die Verschiebung des Verschiebeelements wird das zweite Ende des Federelements relativ zu dem Fahrzeugsitzunterteil verschoben, wodurch ein Winkel, in dem das Federelement gegenüber mindestens einer der Koordinatenrichtungen Fahrzeugsitzlängsrichtung, Fahrzeugsitzbreitenrichtung und Fahrzeugsitzhöhenrichtung angestellt ist, verändert, wodurch eine Veränderung der Federkennlinie erzielt werden kann.

Durch die Veränderung des jeweiligen Anstellwinkels werden die vertikal wirkenden Kraftkomponenten der jeweiligen Federelement geändert.

Insbesondere ist das erste Federelement verlaufend in die Richtung des ersten Winkels und des zweiten Winkels angeordnet, das heißt, dass das erste Federelement in einem Standardkoordinatensystem gesehen schräg verlaufend angeordnet ist.

Das Standardkoordinatensystem ist dabei gebildet aus der Fahrzeugsitzlängsrichtung, der Fahrzeugsitzbreitenrichtung und der Fahrzeugsitzhöhenrichtung, welche jeweils in einem rechten Winkel zueinander angeordnet sind.

Dadurch, dass das erste Federelement mit dem Federelementträger und dem Verschiebeelement verbunden ist, ist zu folgern, dass der erste Winkel und der zweite Winkel abhängig sind von einer Federposition des Fahrzeugsitzes. Durch eine Federbewegung, welche eine Wank- und/oder Vertikalfederbewegung sein kann, ändert sich die Position des Federelementträgers im Raum, so dass ein erstes Ende des ersten Federelements ebenso seine Position im Raum verändert, wobei ein zweites Ende des ersten Federelements, welches mit dem Fahrzeugsitzunterteil verbunden ist, in seiner Position nicht verändert wird. Das heißt insbesondere, dass der erste Winkel und der zweite Winkel nicht konstant sind während einer Federbewegung des Fahrzeugsitzes. In einer Neutralstellung, das heißt, dass der Fahrzeugsitz keiner Federbewegung unterliegt, das heißt, dass es keine Relativbewegung des Fahrzeugsitzoberteils gegenüber dem Fahrzeugsitzunterteil gibt, so ist der erste Winkel und der zweite Winkel konstant.

Zusätzlich ist eine Winkeländerung möglich durch eine Verschiebung des Verschiebeelements relativ zu dem Fahrzeugsitzunterteil.

Je nach Größe des ersten Winkels und des zweiten Winkels ist es möglich, die Federsteifigkeit des ersten Federelements und gegebenenfalls zweiten Federelements einzustellen. Die Federsteifigkeit ist insbesondere eine Einstellmöglichkeit für die Vertikal- und für die Wankrichtung für die Federbewegung. Durch Einstellung des ersten Winkels und des zweiten Winkels ist es möglich, die Federsteifigkeit hinsichtlich der Vertikal- und der Wankrichtung beziehungsweise der Wankfederrichtung und Vertikalfedereinrichtung einzustellen.

Zusätzlich kann die Federsteifigkeit durch die Verschiebung des Verschiebeelements beeinflusst werden, insbesondere während einer Federbewegung.

Gemäß einer besonders bevorzugten Ausführungsform ist es vorgesehen, dass eine Verschiebung des Verschiebeelements bei einer Wankbewegung des Fahrzeugsitzes möglich ist.

Besonders bevorzugt ist die Verschiebung des Verschiebeelements relativ zu dem Fahrzeugsitzunterteil abhängig von der Stärke der Wankbewegung, das heißt, vom Drehwinkel um die erste Drehachse.

Besonders bevorzugt ist vorgesehen, dass sich der erste Scherenarm und der zweite Scherenarm in einem ersten Bereich in Fahrzeugsitzlängsrichtung gesehen kreuzen, wobei es dabei vorgesehen ist, dass zwischen dem ersten Scherenarm und dem zweiten Scherenarm keine bauliche Verbindung vorgesehen ist, mit Ausnahme des Federelementträgers. Das bedeutet insbesondere, dass bei einer Bewegung des Fahrzeugsitzoberteils gegenüber dem Fahrzeugsitzunterteil der erste Bereich, welcher den Kreuzungsbereich des ersten Scherenarm mit dem zweiten Scherenarm darstellt, entsprechend der Bewegung des Fahrzeugsitzes nachfolgen muss. Insbesondere ist hierbei zu verstehen, dass es keine gemeinsame Drehachse zwischen dem ersten Scherenarm und dem zweiten Scherenarm gibt.

Gemäß einer alternativen Ausgestaltung kann es sein, dass zwischen dem ersten Scherenarm und dem zweiten Scherenarm eine bauliche Verbindung vorgesehen ist, so dass die Scherenanordnung einem Scherengestell im herkömmlichen Sinne vorliegt, also die Scherenarme miteinander drehbar um eine gemeinsame Drehachse verbunden sind. Der Federelementträger ist in diesem Fall bevorzugt direkt an der gemeinsamen Drehachse befestigt.

Es kann vorgesehen sein, dass der erste Scherenarm und der zweite Scherenarm kraftverbunden sind, beispielsweise durch eine Reibungskraft, falls die Scherenarme miteinander in Kontakt stehen.

Durch die zuvor beschriebene Zwangsführung beziehungsweise Zwangsbewegung des Federelementträgers aufgrund der Bewegung des Fahrzeugsitzoberteils relativ zu dem Fahrzeugsitzunterteil wird eine Federkraft des ersten Federelements und des zweiten Federelements hervorgerufen, sodass eine Federung des Fahrzeugsitzes durch die Federeinheit hervorgerufen wird.

Allgemein gesprochen wird bei einer relativen Bewegung des Fahrzeugsitzoberteils gegenüber dem Fahrzeugsitzunterteil in einer vertikalen Richtung, das heißt in Fahrzeugsitzhöhenrichtung, aufgrund einer externen Krafteinwirkung auf dem Fahrzeugsitz durch die drehbare Anordnung des Federelementträgers an dem ersten Scherenarm beziehungsweise dem zweiten Scherenarm eine entsprechende Bewegung des Federelementträgers ausgeführt. Das heißt, dass bei einer vertikalen Auslenkung, also einer Auslenkung in einer Fahrzeugsitzhöhenrichtung, der Federelementträger eine lineare Verlagerung entsprechend dem Fahrzeugsitzoberteil in Fahrzeugsitzhöhenrichtung erfährt. Bei einer Wankbewegung des Fahrzeugsitzes, das heißt bei einer Drehung des Fahrzeugsitzoberteils gegenüber dem Fahrzeugsitzunterteil um die erste Drehachse wird der Federelementträger ebenso einer derartigen Wankbewegung unterworfen. Gemäß einer bevorzugten Ausführungsform ist es vorgesehen, dass an dem Fahrzeugsitz ein Sensor angeordnet ist, mittels welchem eine Wankauslenkung des Fahrzeugsitzes erkennbar ist. Bevorzugt ist der Sensor als ein Winkelsensor ausgebildet. Weiter bevorzugt ist der Sensor an dem Fahrzeugsitzoberteil oder Fahrzeugsitzunterteil angeordnet und ist besonders bevorzugt ausgebildet, einen Abweichwinkel zu der Erdoberfläche festzustellen, das heißt, dass der Sensor wie eine Art Wasserwaage funktioniert.

Durch die Wankbewegung des Federelementträgers wird das erste Federelement deformiert, sodass eine Federkraft hervorgerufen wird, welche der Wankbewegung entgegenwirkt.

Erfindungsgemäß ist es vorgesehen, dass die Federeinheit ein zweites Federelement umfasst, wobei das zweite Federelement einerseits mit dem Verschiebeelement und andererseits mit dem Federelementträger verbunden ist und wobei bevorzugt das zweite Federelement in einem dritten Winkel zu der Fahrzeugsitzbreitenrichtung und in einem vierten Winkel zu der Fahrzeugsitzhöhenrichtung angeordnet ist.

Besonders bevorzugt ist das zweite Federelement derart angeordnet, dass bezüglich einer Ebene gebildet aus der Fahrzeugsitzlängsrichtung und der Fahrzeugsitzhöhenrichtung das erste Federelement auf einer ersten Seite der Ebene und das zweite Federelement auf der zweiten Seite der Ebene angeordnet sind.

Ebenso ist es möglich, dass der erste Winkel dem dritten Winkel entspricht und der zweite Winkel dem vierten Winkel entspricht, sodass das erste Federelement und das zweite Federelement hinsichtlich der Ebene gebildet aus Fahrzeugsitzlängsrichtung und Fahrzeugsitzhöhenrichtung symmetrisch zueinander angeordnet sind.

Es ist jedoch ebenso möglich, dass der erste Winkel einen anderen Wert aufweist als der dritte Winkel und dass der zweite Winkel einen anderen Wert als der vierte Winkel aufweist.

Es wird darauf hingewiesen, dass symmetrisch in dem Neutralzustand zu verstehen ist, das heißt, dass keine externe Kraft auf den Fahrzeugsitz einwirkt. Bei einer Federbewegung des Fahrzeugsitzes ändert sich die Anordnung der Federelemente zueinander, da insbesondere bei einer Wankbewegung ein Federelement komprimiert und das andere Federelement entsprechend dekomprimiert wird, das heißt ein Federelement wird gestaucht und das andere Federelement wird in seiner Länge gezogen.

Gemäß einer besonders bevorzugten Ausführungsform ist es vorgesehen, dass der erste Winkel und der zweite Winkel jeweils einen Wert aus einem Bereich ]0; 90°] annehmen können.

Gemäß einer weiteren bevorzugten Ausführungsform ist es vorgesehen, dass der dritte Winkel und der vierte Winkel jeweils einen Wert aus einem Bereich ]0; 90°] annehmen können.

Besonders bevorzugt ist es vorgesehen, dass der erste Winkel, der zweite Winkel, der dritte Winkel und der vierte Winkel nicht den Winkelwert 90° annehmen können, das heißt, dass die Winkel jeweils einen Wert in dem Bereich ]0; 90°[ annehmen können. Das heißt, dass insbesondere in Fahrzeugsitzhöhenrichtung gesehen die Federelemente nicht einer Vertikalfeder entsprechen.

Gemäß einer weiteren bevorzugten Ausführungsform ist es vorgesehen, dass die erste Drehachse parallel zu der Fahrzeugsitzlängsrichtung angeordnet ist, und bevorzugt die zweite Drehachse und die dritte Drehachse in Fahrzeugsitzbreitenrichtung verlaufend angeordnet sind und die zweite und die dritte Drehachse parallel zueinander angeordnet sind.

Insbesondere durch die Anordnung der zweiten Drehachse und der dritten Drehachse kann ein Verkanten der Scherenanordnung mit dem Federelementträger verhindert werden, insbesondere bei einer Relativbewegung des Fahrzeugsitzoberteils zu dem Fahrzeugsitzunterteil. Gemäß einer besonders bevorzugten Ausführungsform ist es vorgesehen, dass die erste Drehachse durch eine Welle definiert ist, welche mit dem Fahrzeugsitzunterteil drehbar verbunden ist. Dabei weist die Welle vorzugsweise ein erstes Ende und ein zweites Ende auf, wobei das erste Ende und das zweite Ende jeweils drehbar mit dem Fahrzeugsitzunterteil verbunden sind. Anstelle einer Welle ist auch ein Stabelement denkbar, wobei die Welle, beziehungsweise das Stabelement zylindrisch oder kantig ausgebildet sein können.

Gemäß einer weiteren bevorzugten Ausführungsform ist es vorgesehen, dass der erste Scherenarm mittels eines ersten Loslagers mit dem Fahrzeugsitzoberteil und mittels eines zweiten Loslagers mit der Welle und der zweite Scherenarm mittels eines dritten Loslagers mit dem Fahrzeugsitzoberteil und mittels eines vierten Loslagers mit der Welle verbunden sind. Eine derartige Ausgestaltung ermöglicht zusätzlich eine Nickfederbewegung des Fahrzeugsitzes mittels der Federeinheit.

Gemäß der Ausgestaltung des ersten Scherenarms und des zweiten Scherenarms mittels von vier Loslagern zur Verbindung mit dem Fahrzeugsitzoberteil und dem Fahrzeugsitzunterteil wird erreicht, dass bei einer Nickbewegung des Fahrzeugsitzes und bei einer entsprechenden Nachfolgung des Fahrzeugsitzoberteils gegenüber dem Fahrzeugsitzunterteil der Nickbewegung des Fahrzeugsitzes gut nachgefolgt werden kann. Dadurch, dass vier Loslager vorgesehen sind, ist die Federeinheit mechanisch unbestimmt, das heißt, es existieren noch Freiheitsgrade, welche nicht hinreichend bestimmt werden können. Um diese Freiheitsgrade weiter zu minimieren, sind entsprechend ein erstes Verbindungselement und ein zweites Verbindungselement vorgesehen, welche durch die entsprechende Anordnung mit dem ersten Scherenarm und dem zweiten Scherenarm und dem Fahrzeugsitzoberteil und dem Fahrzeugsitzunterteil die Freiheitsgrade der vier Loslager minimiert. Besonders bevorzugt ist ein erstes Verbindungselement vorgesehen, welches den ersten Scherenarm mit einem Festlager, welches auf der Welle angeordnet ist, verbindet, und wobei ein zweites Verbindungselement vorgesehen ist, welches ein erstes Verbindungselementteil und ein zweites Verbindungselementteil aufweist, wobei das erste Verbindungselementteil mit dem zweiten Scherenarm und den zweiten Verbindungselementteil drehbar verbunden ist und wobei das zweite Verbindungselementteil mit dem ersten Verbindungselementteil, dem ersten Scherenarm und dem Fahrzeugsitzoberteil drehbar verbunden sind.

Alternativ kann die Scherenanordnung derart sein, dass der erste Scherenarm mittels eines Festlagers mit einem Trageteil und mittels eines ersten Loslagers mit dem Fahrzeugsitzoberteil und der zweite Scherenarm mittels eines weiteren Festlagers mit dem Fahrzeugsitzoberteil und mittels eines vierten Loslagers mit dem Trageteil verbunden ist. Vorzugsweise ist das Trageteil drehbar gegenüber dem Fahrzeugsitzunterteil gelagert.

Gemäß einer weiteren bevorzugten Ausführungsform ist es vorgesehen, dass das zweite Loslager und das vierte Loslager jeweils als ein Verlagerungselement ausgebildet sind, sodass jeweils der erste Scherenarm und der zweite Scherenarm gegenüber der Welle verlagerbar sind. Eine Verlagerung hinsichtlich der Welle heißt, dass eine Verlagerung des ersten Scherenarms und des zweiten Scherenarms in der Fahrzeugsitzlängsrichtung vorgesehen ist. Das Verlagerungselement kann dabei als ein Gleitelement oder als ein Rollelement ausgebildet sein, sodass eine leichtgängige Verlagerung des ersten Scherenarms und des zweiten Scherenarms gegenüber der Welle gewährleistet werden kann.

Gemäß einer weiteren bevorzugten Ausführungsform ist es vorgesehen, dass in Fahrzeugsitzlängsrichtung gesehen das zweite Loslager vor dem dritten Loslager und das erste Loslager vor den vierten Loslager angeordnet ist.

Durch eine Wankbewegung des Fahrzeugsitzes und einer entsprechenden Nachführung des Federträgerelements, welches in Verbindung mit dem ersten, beziehungsweise dem zweiten Federelement steht, welche insbesondere elastisch deformierbar ausgebildet sein können, wird durch das Federträgerelement eine Deformierung der Federelemente hervorgerufen, wodurch eine Federkraft, beziehungsweise eine Rückstellkraft der Federelemente erzeugt wird.

Gemäß einer weiteren bevorzugten Ausführungsform ist eine Arretierungseinheit vorgesehen, so dass eine Bewegung der Federeinheit um die erste Drehachse arretierbar ist, so dass bevorzugt eine Rotationsbewegung um die erste Drehachse blockierbar ist. Dies ist vorteilhaft, wenn sich das Fahrzeug auf einem ebenen Untergrund bewegt, wie etwa einer Straße, wo im Regelfall keine oder geringe Wankbewegungen auftreten.

Weiter gemäß einer besonders bevorzugten Ausführungsform ist es vorgesehen, dass das Verschiebeelement im Wesentlichen flächig ausgebildet ist und gegenüber dem Fahrzeugsitzunterteil translatorisch verschiebbar ist. Insbesondere ist das Verschiebeelement translatorisch in Fahrzeugsitzbreitenrichtung verschiebbar.

Flächig heißt hier insbesondere, dass zumindest ein flächiger Abschnitt vorgesehen ist, wobei die Erstreckung des flächigen Abschnitts in Fahrzeugsitzbreitenrichtung und in Fahrzeugsitzlängsrichtung vorgesehen ist. Die Erstreckung in Fahrzeugsitzhöhenrichtung ist gegenüber den Erstreckungen in Fahrzeugsitzlängsrichtung und in Fahrzeugsitzbreitenrichtung vernachlässigbar.

Gemäß einer weiteren bevorzugten Ausführungsform ist es vorgesehen, dass das Verschiebeelement mittels eines Aktuators gegenüber dem Fahrzeugsitzunterteil verschiebbar ist, wobei bevorzugt der Aktuator einerseits mit dem Verschiebeelement und andererseits mit dem Fahrzeugsitzunterteil verbunden ist.

Weiter bevorzugt verschiebt der Aktuator das Verschiebeelement abhängig von der Wankauslenkung des Fahrzeugsitzes, also abhängig von dem Wert des Sensors. Dabei ist bevorzugt die Abhängigkeit derart, dass wenn eine größere Wankauslenkung vorliegt, eine größere Verschiebung des Verschiebeelements mittels des Aktuators vorgenommen wird. Durch die Verschiebung des Verschiebeelements kann, wie bereits beschrieben, die Kraftkomponente der Federelemente beeinflusst werden.

Gemäß einer bevorzugten Ausführungsform ist der Aktuator ein mechanischer Aktuator, ein elektrischer Aktuator, ein pneumatischer Aktuator oder ein hydraulischer Aktuator. Gemäß einer weiteren bevorzugten Ausführungsform ist dabei der Aktuator eines ausgewählt aus der Gruppe umfassend eine Zahnstange mit einem zugehörigen Ritzel, ein Elektrozylinder, ein Pneumatikzylinder und ein Hydraulikzylinder.

Weiter ist ein Verfahren zum Federn von Wankbewegungen eines Fahrzeugsitzes vorgesehen, wobei das Verfahren die Verfahrensschritte umfasst:
a) Bestimmen einer Wankauslenkung des Fahrzeugs oder des Fahrzeugsitzunterteils mittels eines Sensors, insbesondere eines Winkelsensors;
b) Ermitteln einer Verschiebestrecke des Verschiebeelements;
c) Ansteuerung des Aktuators, so dass mittels einer Aktuatorbewegung das Verschiebeelement um die Verschiebestrecke verschoben wird.

Die Verschiebestrecke ist dabei abhängig von der bestimmten Wankauslenkung des Fahrzeugsitzes. Je größer die Wankauslenkung des Fahrzeugs ist, desto größer ist die Verschiebestrecke.

Weiter ist die Verschiebung des Verschiebeelements abhängig von der Wankrichtung des Fahrzeugsitzes. Dies wird nachfolgend gemäß den Figuren dargestellt. Bei einer Wankbewegung im Uhrzeigersinn bewegt sich im linken Bereich das Fahrzeugsitzoberteil und das Fahrzeugsitzunterteil aufeinander zu und im rechten Teil voneinander weg. Dies bedeutet, dass die Federelemente derart verschoben werden, dass die wirkenden Vertikal-Kraftkomponenten auf das Fahrzeugsitzoberteil der beiden Federelemente gleich sind. Hierdurch wird eine Verkippung des Fahrzeugsitzoberteils verhindert. Die Verschiebung des Verschiebeelements ist dabei derart, dass das Verschiebeelement von der neutralen Stellung in Richtung nach links geschoben wird, so dass die Kraftkomponente des linken Federelements verringert werden kann. Je stärker die Wankbewegung, desto größer die Verschiebung, um die stärkere Wankbewegung gut abfedern zu können.

Weitere vorteilhafte Ausführungsformen ergeben sich aus den Unteransprüchen.

Weitere Ziele, Vorteile und Zweckmäßigkeiten der vorliegenden Erfindung sind der nachfolgenden Beschreibung in Verbindung mit den Zeichnungen zu entnehmen. Hierbei zeigen:
- Fig. 1: Fahrzeugsitz gemäß einer bevorzugten Ausführungsform in einer perspektivischen Ansicht;
- Fig. 2A: Fahrzeugsitz in einer Vorderansicht in einer neutralen Stellung;
- Fig. 2B: Fahrzeugsitz nach Figur 2A in einer Wankstellung ohne Verschiebung des Verschiebeelements;
- Fig. 2C: Fahrzeugsitz nach Figur 2A in einer Wankstellung mit Verschiebung des Verschiebeelements;
- Fig. 2D: Vergleich der Figuren 2B und 2C;
- Fig. 3: Fahrzeugsitz gemäß einer Ausführungsform mit verschiedenen Anstellwinkeln der Federelemente;
- Fig. 4A: Fahrzeugsitz in einer seitlichen Darstellung und in der neutralen Stellung;
- Fig. 4B: Schnitt entlang B-B in der Figur 4A;
- Fig. 5A: Fahrzeugsitz in einer seitlichen Darstellung und in der Wankstellung;
- Fig. 5B: Schnitt entlang D-D in der Figur 5A;
- Fig. 6A: Scherenanordnung nach einer ersten Ausführungsform;
- Fig. 6B: Scherenanordnung nach einer zweiten Ausführungsform;
- Fig. 7A: schematische Darstellung des Fahrzeugsitzes nach Figur 1A in der neutralen Stellung;
- Fig. 7B: schematische Darstellung des Fahrzeugsitzes nach Figur 1A in der nach unten verlagerten Stellung;
- Fig. 8A: Federträgerelement in einer ersten perspektivischen Ansicht;
- Fig. 8B: Federträgerelement in einer zweiten perspektivischen Ansicht.

In den Figuren werden gleiche Bauelemente mit den gleichen Bezugszeichen bezeichnet, wobei in machen Figuren die Bezugszeichen zur besseren Übersichtlichkeit weggelassen werden können.

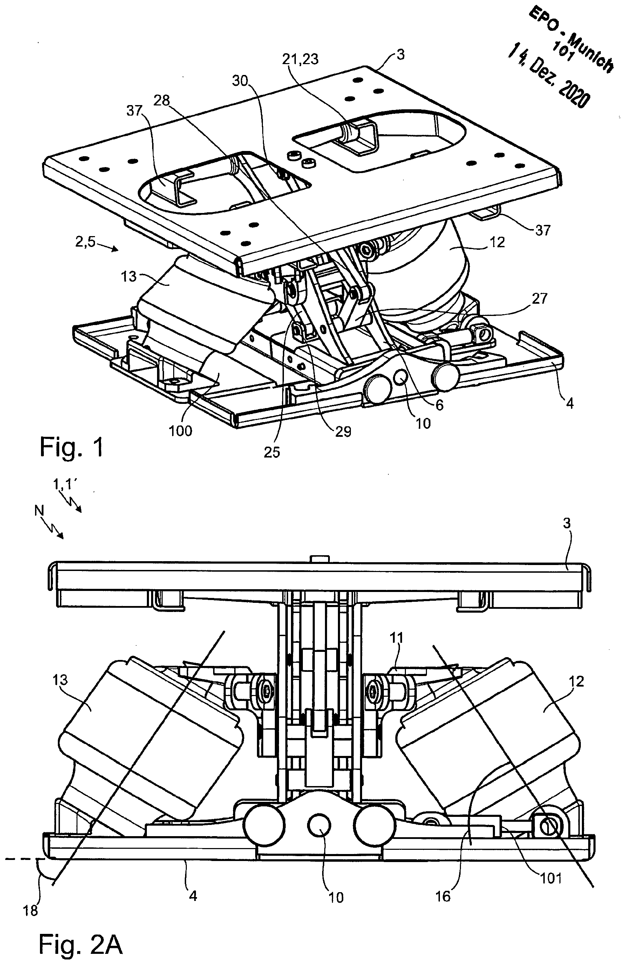

In der Figur 1 ist ein Fahrzeugsitz 1, beziehungsweise ein Fahrzeugsitzunterbau 1' dargestellt, wobei der Fahrzeugsitz 1 ein Fahrzeugsitzoberteil 3 und ein Fahrzeugsitzunterteil 4 aufweist, welche mittels einer Federeinheit 2 miteinander derart verbunden sind, dass das Fahrzeugsitzoberteil und das Fahrzeugsitzunterteil relativ zueinander bewegbar und federbar sind. Weiter ist zu erkennen, dass die Federeinheit 2 drehbar um eine erste Drehachse 10 mit dem Fahrzeugsitzunterteil 4 verbunden ist.

Die Federeinheit 2 umfasst eine Scherenanordnung 5 mit einem ersten Scherenarm 6 und einem zweiten Scherenarm 7, einem dritten Scherenarm 8 und einem vierten Scherenarm 9, wobei die Federeinheit weiter einen Federelementträger 11 und ein erstes Federelement 12 sowie ein zweites Federelement 13 aufweist. Wie zu erkennen ist, ist der Federelementträger drehbar um eine zweite Drehachse mit dem ersten Scherenarm und drehbar um eine dritte Drehachse 15 mit dem zweiten Scherenarm 7 verbunden, wobei das erste Federelement 12 einerseits mit dem Verschiebeelement 100 und andererseits mit dem Federelementträger 11 verbunden ist, wobei weiter bevorzugt das erste Federelement 12 in einem ersten Winkel 16 zu einer Fahrzeugsitzbreitenrichtung B und in einem zweiten Winkel 17 zu einer Fahrzeugsitzhöhenrichtung H angeordnet ist.

Die nähere Anordnung der Federelemente 12, 13 sowie die nähere Ausgestaltung der Scherenanordnung 5 sowie das Verschiebeelement 100 wird in den nachfolgenden Figuren weiter beschrieben.

Die erste Luftfeder 12, beziehungsweise die zweite Luftfeder 13 sind in der Figur 1 als eine elastisch deformierbare Luftfeder ausgebildet, wobei es auch weiter denkbar ist, dass das erste Federelement 12 und das zweite Federelement 13 als eine mechanische Feder ausgebildet sein können.

Es ist weiterhin denkbar, dass das erste Federelement 12 als eine Luftfeder ausgebildet ist und das zweite Federelement 13 als eine mechanische Feder, oder umgekehrt.

Weiter weist die Scherenanordnung 5 ein erstes Verbindungselement 25 und ein zweites Verbindungselement 26 auf, wobei das zweite Verbindungselement 25 ein erstes Verbindungselementteil 27 und ein zweites Verbindungselementteil 28 aufweist, wobei das erste Verbindungselement 25 drehbar mit dem ersten Scherenarm 6 verbunden ist und andererseits mit einem ersten Festlager 29 verbunden ist, wobei das erste Festlager 29 mit einer Welle 20 oder mit einem Trageteil 40 verbunden ist.

Weiter ist das erste Verbindungselementteil 27 drehbar mit dem zweiten Scherenarm 7 sowie drehbar mit dem zweiten Verbindungselementteil 28 verbunden, wobei das zweite Verbindungselementteil 28 weiter drehbar mit dem ersten Scherenarm 7 und mittels eines Festlagers 30 mit dem Fahrzeugsitzoberteil 3 verbunden ist.

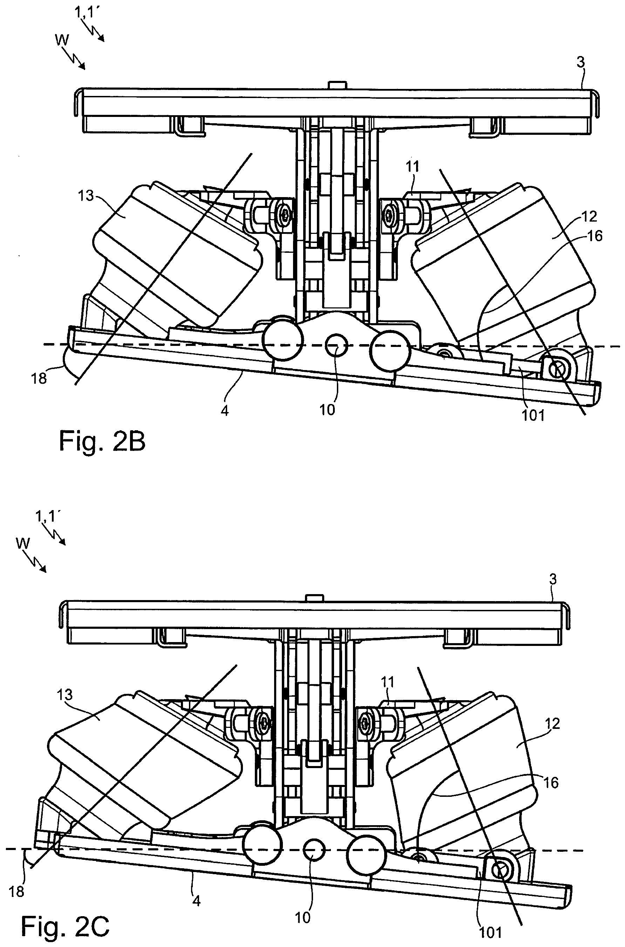

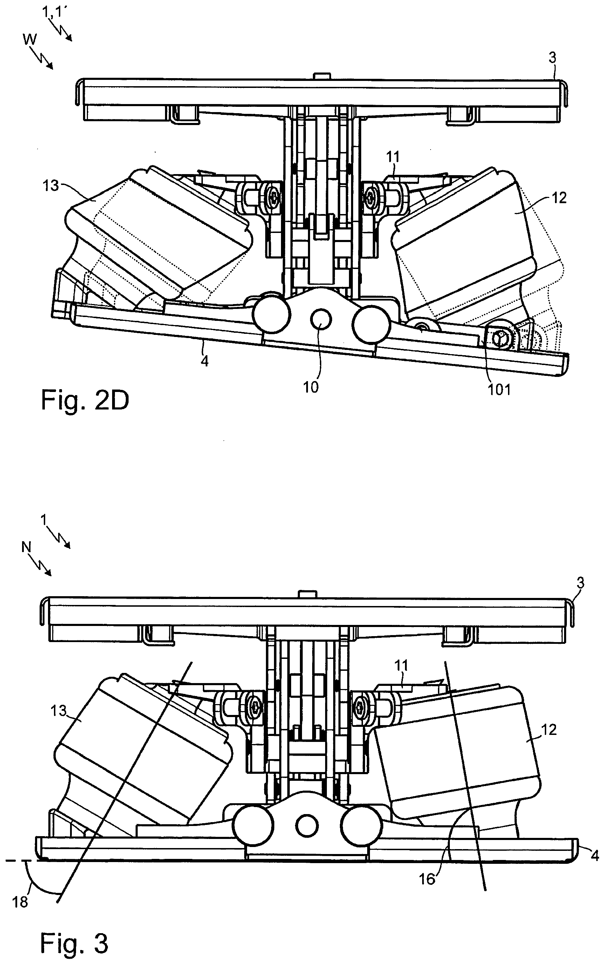

In den Figuren 2A, 2B, 2C und 2D ist der Fahrzeugsitz nach Figur 1 in einer Vorderansicht dargestellt, wobei in der Figur 2A der Fahrzeugsitz 1 in einer neutralen Stellung N dargestellt ist, in der Figur 2B in einer Wankstellung W ohne Verschiebung des Verschiebeelements 100 und in der Figur 2C in einer Wankstellung mit Verschiebung des Verschiebeelements 100 und in der Figur 2D ein Vergleich der Figuren 2B und 2C.

Bezüglich der Figur 2A welche den Fahrzeugsitz 1 in der neutralen Stellung N darstellt, ist zu erkennen, dass das erste Federelement 12 in einem ersten Winkel 16 und das zweite Federelement 13 in einem dritten Winkel 18 zu der Fahrzeugsitzbreitenrichtung B angeordnet sind. Erfindungsgemäß ist es vorgesehen, dass das erste Federelement 12, beziehungsweise das zweite Federelement 13 einerseits mit dem Federelementträger 11 verbunden sind und andererseits mit dem Verschiebeelement 100. Bei einer Federbewegung in Fahrzeugsitzhöhenrichtung H, das heißt in vertikaler Richtung des Fahrzeugsitzes 1, ist es dadurch vorgesehen, dass das erste Federelement 12, beziehungsweise das zweite Federelement 13 durch die Verbindung zu dem Verschiebeteil 100 an dieser Stelle in ihrer Position verändert wird, auch ohne Verschiebung des Verschiebeteils 100, jedoch bewegt sich der Federelementträger 11 bei einer Bewegung in Fahrzeugsitzhöhenrichtung in Richtung H natürlich ebenso in Fahrzeugsitzhöhenrichtung H nach oben, beziehungsweise nach unten. Das heißt, dass sich die Verbindungsstelle zwischen den Federelementen 12, 13 mit dem Federelementträger 11 ebenso in Fahrzeugsitzhöhenrichtung H nach oben, beziehungsweise nach unten bewegt. Das bedeutet, dass der erste Winkel 16, beziehungsweise der dritte Winkel 18 während einer Federbewegung in Fahrzeugsitzhöhenrichtung H nicht konstant sind.

Die Veränderung der Winkel 16, 17, 18, 19 ist einem Vergleich der Figuren 2B und2C zu entnehmen. Eine Überlagerung der Figur 2B und 2C ist der Figur 2D zu entnehmen. Die Winkeländerung wird dabei schematisch nochmals dargestellt.

Dadurch, dass aufgrund der Wankbewegung des Fahrzeugsitzes 1 ein Aktuator 101 dafür sorgt, dass das Verschiebeelement 100 gegenüber dem Fahrzeugsitzunterteil 4 verschoben wird, kann eine weitergehende Verbesserung der Federung der Wankbewegung des Fahrzeugsitzes 1 erreicht werden. Dies ist insbesondere der Figur 2D zu entnehmen.

Aus der Figur 3 ist ebenso der Fahrzeugsitz 1 gemäß der Figur 2A zu entnehmen, wobei hierbei die Anstellwinkel, das heißt der erste Winkel 16 und der dritte Winkel 18, voneinander verschieden sind. Das heißt, dass der erste Winkel 16 einen anderen Winkel aufweist als der dritte Winkel 18.

Im Allgemeinen gilt die Beschreibung hinsichtlich des ersten Winkels 16 und des dritten Winkels 18 ebenso für den zweiten Winkel 17 und den vierten Winkel 19.

Es kann jedoch auch vorgesehen sein, dass in einer neutralen Stellung N des Fahrzeugsitzes 1 der erste Winkel 16 dem dritten Winkel 18 entspricht und der zweite Winkel 17 dem vierten Winkel 19 entspricht.

Durch die Ausgestaltung mit verschiedenen Winkeln für das jeweilige Federelement 12, 13 ist es möglich, die Federsteifigkeit der Federelemente 12, 13 einzustellen.

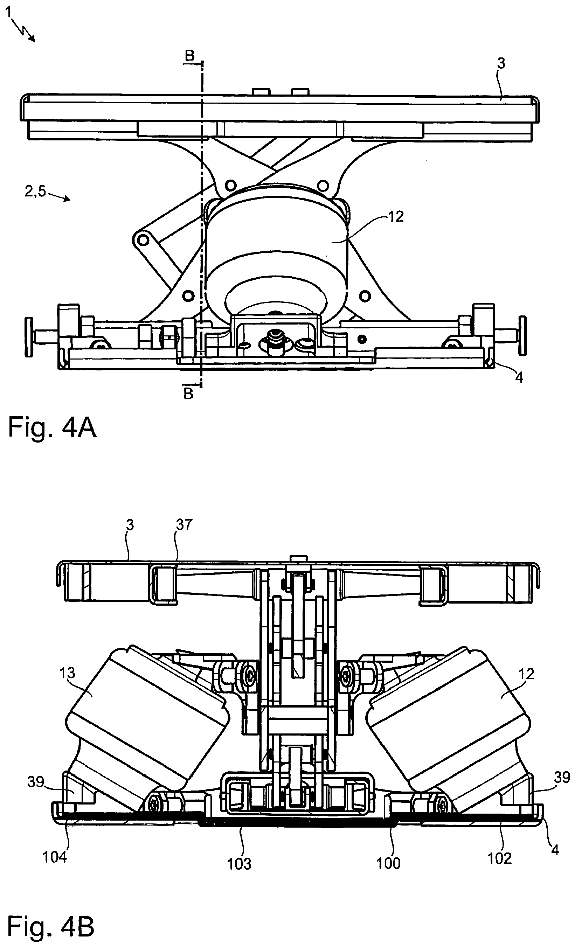

In der Figur 4A ist der Fahrzeugsitz 1 in der neutralen Stellung N in einer Seitenansicht dargestellt und in der Figur 4B ein Schnitt entlang der Linie B-B, wie in der Figur 4A dargestellt.

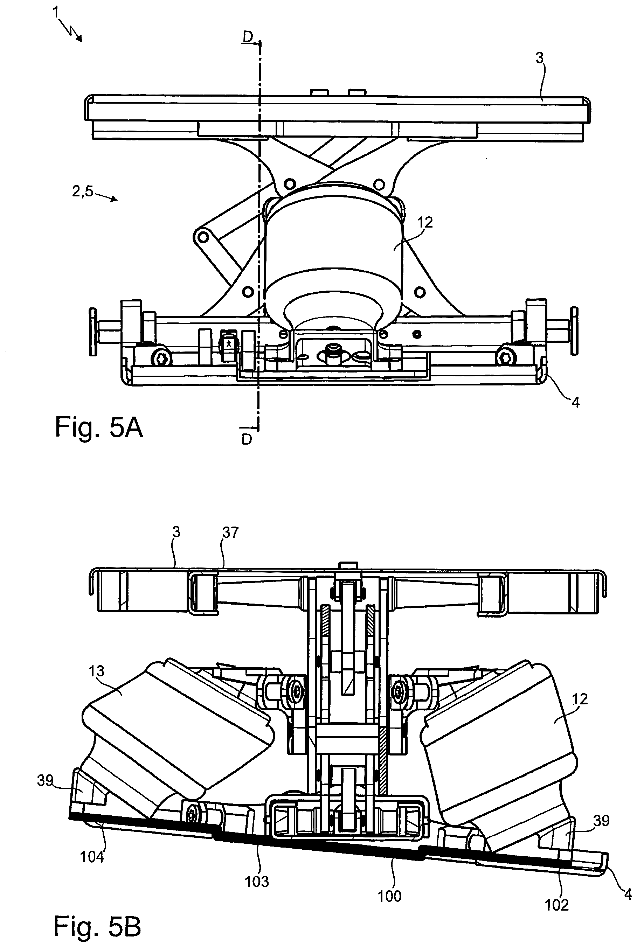

In der Figur 5A ist der Fahrzeugsitz 1 in der Wankstellung W in einer Seitenansicht dargestellt und in der Figur 5B ein Schnitt entlang der Linie D-D, wie in der Figur 5A dargestellt.

Ein Augenmerk wird insbesondere in den Figuren 4B und 5B auf das Verschiebeelement 100 gerichtet, welches hier genauer dargestellt wird.

Wie zu erkennen ist, sind die Haupterstreckungen des Verschiebeelements 100, welches im Wesentlich flächig ausgebildet ist, die Fahrzeugsitzbreitenrichtung B und die Fahrzeugsitzlängsrichtung L, in der neutralen Stellung N des Fahrzeugsitzes 1. Es ist dabei darauf hingewiesen, dass die Haupterstreckungen sich bei einer Wankbewegung entsprechend mit um die erste Drehachse 10 drehen, so dass die Erstreckungen des Verschiebeelements 100 jeweils in einem Winkel zu der Fahrzeugsitzbreitenrichtung B und der Fahrzeugsitzlängsrichtung L angeordnet sind.

Wie zu erkennen ist, weist das Verschiebeelement 100 einen ersten flächigen Bereich 102, einen zweiten flächigen Bereich 103 und einen dritten flächigen Bereich 104 auf, wobei der zweite flächige Bereich 103 den ersten flächigen Bereich 102 und den dritten flächigen Bereich 104 miteinander verbindet.

Der erste flächige Bereich 102 ist mittels eines unteren Adapterelements 39 mit dem ersten Federelement 12 und der dritte flächige Bereich 104 mittels eines weiteren unteren Adapterelements 39 mit dem zweiten Federelement verbunden. Das jeweilige untere Adapterelement 39 ist mit dem Verschiebeelement 100 fest verbunden.

Weiter bevorzugt ist, in der neutralen Stellung N des Fahrzeugsitzes gesehen, der zweite flächige Bereich 103 in Fahrzeugsitzhöhenrichtung H unterhalb dem ersten flächigen Bereich 102 und dem dritten flächigen Bereich 104 angeordnet. Dies dient dafür, unter der ersten Drehachse 10 ausreichend Platz für den Fahrzeugsitz 1 bei der Wankbewegung zu schaffen.

Wie insbesondere der Figur 5B im Vergleich mit der Figur 4B zu entnehmen ist, wurde das Verschiebeelement 100 aufgrund der Wankbewegung des Fahrzeugsitzes 1 gegenüber dem Fahrzeugsitzunterteil 4 verschoben.

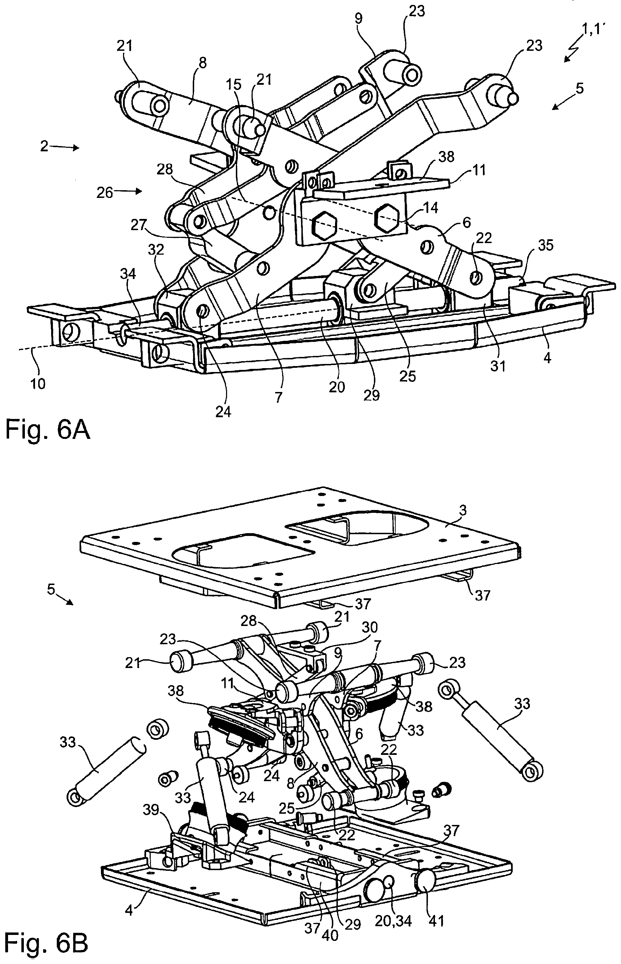

In der Figur 6A ist eine erste Ausführungsform der Scherenanordnung 5 und in der Figur 6B eine zweite Ausführungsform der Scherenanordnung 5 zu erkennen.

Zunächst wird die Ausführungsform der Scherenanordnung 5 gemäß der Figur 6A beschrieben.

Die Scherenanordnung 5 umfasst einen ersten Scherenarm 6, einen zweiten Scherenarm 7, einen dritten Scherenarm 8 und einen vierten Scherenarm 9.

Die Ausführungen des dritten Scherenarms 8 und des vierten Scherenarms 9 gelten entsprechend dem zugehörigen ersten Scherenarm 5 und dem zugehörigen zweiten Scherenarm 7. Dies gilt insbesondere, da der dritte Scherenarm 8 identisch verlaufend mit dem ersten Scherenarm 6 und der vierte Scherenarm 9 mit dem zweiten Scherenarm 7 ist.

Wie weiter zu erkennen, ist der Federelementträger 11 vorgesehen, welcher drehbar um eine zweite Drehachse 14 mit dem ersten Scherenarm 6 und drehbar um eine dritte Drehachse 15 mit dem zweiten Scherenarm 7 verbunden ist.

Weiter ist der erste Scherenarm 6 mittels eines ersten Loslagers 21 mit dem Fahrzeugsitzoberteil 3 und mittels eines zweiten Loslagers 22 mit einer Welle 20 und der zweite Scherenarm 7 mittels eines dritten Loslagers 23 mit dem Fahrzeugsitzoberteil 3 und mittels eines vierten Loslagers 24 mit der Welle 20 verbunden, wobei ein erstes Verbindungselement 25 den ersten Scherenarm 6 mit einem ersten Festlager 29, welches auf der Welle 20 angeordnet ist, verbindet, und wobei ein zweites Verbindungselement 26 vorgesehen ist, welches ein erstes Verbindungselementteil 27 und ein zweites Verbindungselementteil 28 aufweist, wobei das erste Verbindungselementteil 27 mit dem zweiten Scherenarm 7 und dem zweiten Verbindungselementteil 28 drehbar verbunden ist, und wobei das zweite Verbindungselementteil 28 mit dem ersten Verbindungselementteil 27, dem ersten Scherenarm 6 und dem Fahrzeugsitzoberteil 3 drehbar verbunden ist. Dabei ist das zweite Verbindungselementteil 28 insbesondere mit einem zweiten Festlager 30 drehbar verbunden. Das zweite Festlager ist dabei an dem Fahrzeugsitzoberteil 3 angeordnet.

Das erste Loslager 21 und das zweite Loslager 23 sind jeweils als Laufrollen 36 ausgebildet, welche mit dem jeweiligen Scherenarm 6, 7, 8, 9 drehbar verbunden ist und in einer Laufschiene 37 rollend gelagert ist, wobei die Laufschiene 37 an dem Fahrzeugsitzoberteil 3 angeordnet ist.

Das zweite Loslager 22, beziehungsweise das vierte Loslager 24 ist dabei derart ausgebildet, dass ein erstes Verlagerungselement 31 und ein zweites Verlagerungselement 32 vorgesehen sind, wobei an dem ersten Verlagerungselement der erste Scherenarm 6 drehbar verbunden ist und an dem zweiten Verlagerungselement 32 der zweite Scherenarm 7 drehbar angeordnet ist.

Die Verlagerungselemente 31, 32 sind dabei derart verlagerbar, dass sie gegenüber der Welle 20 verlagerbar sind in Richtung der ersten Drehachse 10.

Eine Verlagerung des ersten Verlagerungselements 31 und des zweiten Verlagerungselements 32 erfolgt insbesondere bei einer Vertikalbewegung des Fahrzeugsitzes 1.

Dadurch, dass die Scherenarme 6, 7, 8, 9 jeweils mittels eines Loslagers mit dem Fahrzeugsitzunterteil, beziehungsweise dem Fahrzeugsitzoberteil 3 verbunden sind, ist es notwendig, die Freiheitsgrade hinsichtlich der Bewegung der Scherenanordnung 5 einzugrenzen. Dies geschieht mittels des ersten Verbindungselements 25 und des zweiten Verbindungselements 26.

Weiter weist der Federelementträger 11 eine Adapterplatte 38 auf, mittels welcher das jeweilige Federelement 12, 13 (hier nicht dargestellt) mit dem Federelementträger 11 verbunden werden kann.

Die zweite Ausführungsform, welche in der Figur 6B dargestellt ist, ist vom Funktionsprinzip identisch mit der Ausführungsform der Figur 6A, wobei jedoch die Ausgestaltung sich unterscheidet.

Die Ausführungsform der Figur 6B umfasst ebenso einen ersten Scherenarm 6, einen zweiten Scherenarm 7, einen dritten Scherenarm 8, und einen vierten Scherenarm 9, wobei der erste Scherenarm 6 und der dritte Scherenarm 8 sowie der zweite Scherenarm 7 und der vierte Scherenarm 9 jeweils identisch verlaufend sind. Ebenso sind die jeweiligen Scherenarme 6, 7, 8, 9 mittels eines Loslagers 21, 23 welches ausgebildet ist als eine Laufrolle 36, in der Führungsschiene 37 des Fahrzeugsitzoberteil 3 geführt.

Ebenso weist diese Ausführungsform das erste Verbindungselement 25 und das zweite Verbindungselement 26 auf, in derselben Anordnung und Funktion wie in der Figur 6A beschrieben.

Unterschiedlich ist hierbei die Anordnung der Loslager 22, 24 gegenüber dem Fahrzeugsitzunterteil 4. Es ist insbesondere ein Trageteil 40 dargestellt, welches drehbar um die erste Drehachse 10 mit dem Fahrzeugsitzunterteil 4 verbunden ist. Dabei ist eine Welle 20 vorgesehen an dem vorderen und dem hinteren Ende des Trageteils in Fahrzeugsitzlängsrichtung L, wobei das Trageteil 40 ebenso Laufschienen 37 aufweist, in welchen die Loslager 22, 24 mittels Laufrollen 36 abrollen können gegenüber dem Trageteil 40.

Weiter ist auf dem Trageteil 40 das erste Festlager 29 angeordnet, mittels welchem der erste Scherenarm 6 mittels des ersten Verbindungselements 25 verbunden ist.

In der Figur 6B ist ebenso schematisch eine untere Adapterplatte 39 dargestellt, mittels welcher das Federelement 12, 13 jeweils mit dem Fahrzeugsitzunterteil 4 verbunden werden kann. Wie zu erkennen ist, weist die untere Adapterplatte 39 einen schrägen Anteil auf, mittels welchem der Winkel des entsprechenden Federelements 12, 13 eingestellt werden kann.

Gleiches gilt ebenso für die obere Adapterplatte 38, welche gegenüber der Fahrzeugsitzbreitenrichtung B einen Winkel aufweist, wobei die Schrägstellung der oberen Adapterplatte 38 und der unteren Adapterplatte 39 parallel zueinander ist.

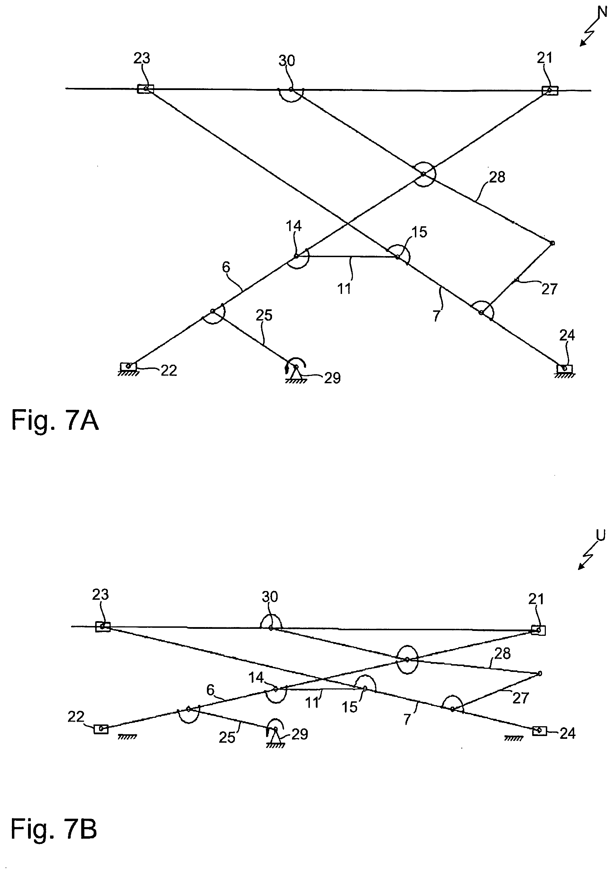

In den Figuren 7A und 7B ist die Kinematik der beweglichen Teile des Fahrzeugsitzes 1 nochmal schematisch dargestellt.

In der Figur 7A ist der Fahrzeugsitz in der Neutralstellung N und in der Figur 7B in der nach unten ausgelegten Stellung U dargestellt.

Die Bewegung der beweglichen Teile, welche mit dem entsprechenden Bezugszeichen bezeichnet sind, können durch einen Vergleich der Figuren 7A und 7B entnommen werden.

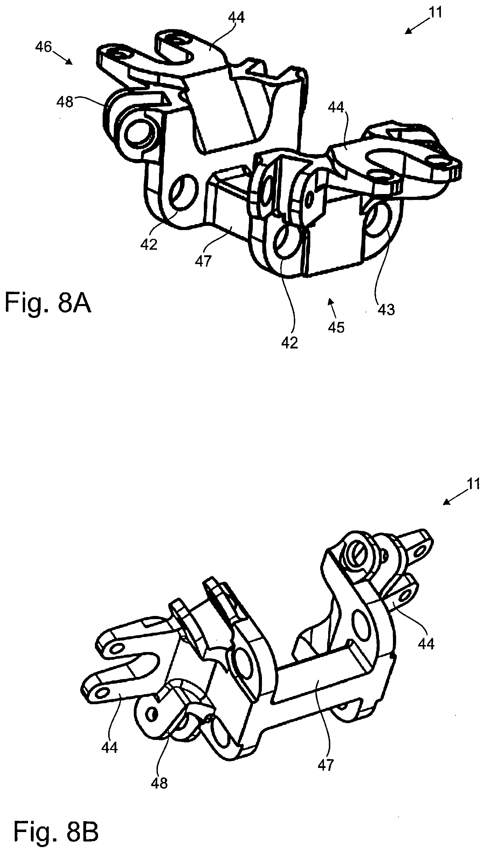

Weiter ist in den Figuren 8A und 8B der Federelementträger 11 in einer ersten perspektivischen und in einer zweiten perspektivischen Darstellung dargestellt.

Der Federelementträger 11 weist dabei eine erste Federelementträgerhalterung 45 und eine zweite Federelementträgerhalterung 46 auf, welche mittels eines Verbindungsteils 47 miteinander verbunden sind. Die jeweilige Federelementträgerhalterung 45, 46 weist eine erste Verbindungsstelle 42 und eine zweite Verbindungsstelle 43 auf, mittels welchen der Federelementträger mit dem ersten Scherenarm 6 und dem zweiten Scherenarm 7, beziehungsweise dem drittem Scherenarm 8 und dem vierten Scherenarm 9 verbunden werden kann, insbesondere drehbar.

Weiter weist sowohl die erste Federelementhalterung 45 als auch die zweite Federelementhalterung 46 eine Adapterplattenhalterung 44 auf, mittels welcher die obere Adapterplatte 38 mit dem Federelementträger verbunden werden kann.

### Bezugszeichenliste

- 1: Fahrzeugsitz
- 2: Federeinheit
- 3: Fahrzeugsitzoberteil
- 4: Fahrzeugsitzunterteil
- 5: Scherenanordnung
- 6: erster Scherenarm
- 7: zweiter Scherenarm
- 8: dritter Scherenarm
- 9: vierter Scherenarm
- 10: erste Drehachse
- 11: Federelementträger
- 12: erstes Federelement
- 13: zweites Federelement
- 14: zweite Drehachse
- 15: dritte Drehachse
- 16: erster Winkel
- 17: zweiter Winkel
- 18: dritter Winkel
- 19: vierter Winkel
- 20: Welle
- 21: erstes Loslager
- 22: zweites Loslager
- 23: drittes Loslager
- 24: viertes Loslager
- 25: erstes Verbindungselement
- 26: zweites Verbindungselement
- 27: erstes Verbindungselementteil
- 28: zweites Verbindungselementteil
- 29: erstes Festlager
- 30: zweites Festlager
- 31: erstes Verlagerungselement
- 32: zweites Verlagerungselement
- 33: Dämpferelement
- 34: erstes Ende der Welle
- 35: zweites Ende der Welle
- 36: Laufrolle
- 37: Laufschiene
- 38: Adapterplatte
- 39: untere Adapterplatte
- 40: Trageteil
- 41: Arretierungselement
- 42: erste Verbindungsstelle
- 43: zweite Verbindungsstelle
- 44: Adapterplattenhalterung
- 45: erste Federelementträgerhalterung
- 46: zweite Federelementträgerhalterung
- 47: Verbindungteil
- 48: Dämpferelementhalterung
- 100: Verschiebeelement
- 101: Aktuator
- 102: erster flächiger Bereich
- 103: zweiter flächiger Bereich
- 104: dritter flächiger Bereich
- N: neutrale Stellung
- W: Wankstellung
- L: Fahrzeugsitzlängsrichtung
- B: Fahrzeugsitzbreitenrichtung
- H: Fahrzeugsitzhöhenrichtung

## Patentansprüche

1. Fahrzeugsitz (1) mit einer Federeinheit (2) zum Federn von Wank- und Vertikalbewegungen des Fahrzeugsitzes (1), wobei der Fahrzeugsitz (1) ein Fahrzeugsitzoberteil (3) und ein Fahrzeugsitzunterteil (4) aufweist, wobei das Fahrzeugsitzoberteil (3) und das Fahrzeugsitzunterteil (4) mittels der Federeinheit (2) verbunden sind, so dass das Fahrzeugsitzoberteil (3) und das Fahrzeugsitzunterteil (4) relativ zueinander bewegbar sind, wobei die Federeinheit (2) eine Scherenanordnung (5) mit einem ersten Scherenarm (6) und einem zweiten Scherenarm (7) aufweist, wobei
die Federeinheit (2) drehbar um eine erste Drehachse (10) mit dem Fahrzeugsitzunterteil (4) verbunden ist und einen Federelementträger (11) und ein erstes Federelement (12) umfasst,
wobei ein Verschiebeelement (100) vorgesehen ist, welches gegenüber dem Fahrzeugsitzunterteil verschiebbar gelagert ist und wobei das erste Federelement (12) einerseits mit dem Verschiebeelement (100) und andererseits mit dem Federelementträger (11) verbunden ist, wobei die Federeinheit (2) ein zweites Federelement (13) umfasst, wobei das zweite Federelement (13) einerseits mit dem Verschiebeelement (100) und andererseits mit dem Federelementträger (11) verbunden ist.

2. Fahrzeugsitz (1) nach Anspruch 1,
**dadurch gekennzeichnet, dass**
das erste Federelement (12) in einem ersten Winkel (16) zu einer Fahrzeugsitzbreitenrichtung (B) und in einem zweiten Winkel (17) zu einer Fahrzeugsitzhöhenrichtung (H) angeordnet ist.

3. Fahrzeugsitz (1) nach Anspruch 1 oder 2,
**dadurch gekennzeichnet, dass**
das zweite Federelement (13) in einem dritten Winkel (18) zu der Fahrzeugsitzbreitenrichtung (B) und in einem vierten Winkel (19) zu der Fahrzeugsitzhöhenrichtung (H) angeordnet ist.

4. Fahrzeugsitz (1) nach einem der Ansprüche 1 bis 3,
**dadurch gekennzeichnet, dass**
die erste Drehachse (10) definiert ist durch eine Welle (20), welche mit dem Fahrzeugsitzunterteil (4) drehbar verbunden ist.

5. Fahrzeugsitz (1) nach einem der Ansprüche 1 bis 4,
**dadurch gekennzeichnet, dass**
das Verschiebeelement flächig ausgebildet ist gegenüber dem Fahrzeugsitzunterteil translatorisch verschiebbar ist.

6. Fahrzeugsitz (1) nach einem der Ansprüche 1 bis 5,
**dadurch gekennzeichnet, dass**
das Verschiebeelement (100) mittels eines Aktuators (101) gegenüber dem Fahrzeugsitzunterteil (4) verschiebbar ist, wobei der Aktuator (101) einerseits mit dem Verschiebeelement (100) und andererseits mit dem Fahrzeugsitzunterteil (4) verbunden ist.

7. Fahrzeugsitz (1) nach Anspruch 6,
**dadurch gekennzeichnet, dass**
der Aktuator (101) ein mechanischer Aktuator, ein elektrischer Aktuator, ein pneumatischer Aktuator oder ein hydraulischer Aktuator ist.

8. Fahrzeugsitz (1) nach einem der Ansprüche 1 bis 7,
**dadurch gekennzeichnet, dass**
der Federelementträger (11) drehbar um eine zweite Drehachse (14) mit dem ersten Scherenarm (6) und drehbar um eine dritte Drehachse (15) mit dem zweiten Scherenarm (7) verbunden ist.

9. Fahrzeugsitz (1) nach Anspruch 8,
**dadurch gekennzeichnet, dass**
die erste Drehachse (10) parallel zu der Fahrzeugsitzlängsrichtung (L) ist, und wobei die zweite Drehachse (14) und die dritte Drehachse (15) in Fahrzeugsitzbreitenrichtung (B) verlaufend angeordnet sind und die zweite (14) und die dritte Drehachse (15) parallel zueinander angeordnet sind.

10. Verfahren zum Federn von Wank- und Vertikalbewegungen eines Fahrzeugsitzes (1) nach einem der Ansprüche 1 bis 9,
wobei das Verfahren die Verfahrensschritte umfasst:
a) Bestimmen einer Wankauslenkung des Fahrzeugs oder des Fahrzeugsitzunterteils (4) oder eines Kabinenbodens, auf welchem der Fahrzeugsitz (1) angeordnet ist mittels eines Winkelsensors;
b) Ermitteln einer Verschiebestrecke des Verschiebeelements (100);
c) Ansteuerung des Aktuators (101), so dass mittels einer Aktuatorbewegung das Verschiebeelement (100) um die Verschiebestrecke verschoben wird.

11. Fahrzeugsitz (1) mit einer Federeinheit (2) zum Federn von Wank- und Vertikalbewegungen des Fahrzeugsitzes (1), wobei der Fahrzeugsitz (1) ein Fahrzeugsitzoberteil (3) und ein Fahrzeugsitzunterteil (4) aufweist, wobei das Fahrzeugsitzoberteil (3) und das Fahrzeugsitzunterteil (4) mittels der Federeinheit (2) verbunden sind, so dass das Fahrzeugsitzoberteil (3) und das Fahrzeugsitzunterteil (4) relativ zueinander bewegbar sind, wobei die Federeinheit (2) eine Scherenanordnung (5) mit einem ersten Scherenarm (6) und einem zweiten Scherenarm (7) aufweist,
wobei
die Federeinheit (2) drehbar um eine erste Drehachse (10) mit dem Fahrzeugsitzunterteil (4) verbunden ist und einen Federelementträger (11) und ein erstes Federelement (12) umfasst,
wobei ein Verschiebeelement (100) vorgesehen ist, welches gegenüber dem Fahrzeugsitzunterteil verschiebbar gelagert ist und wobei das erste Federelement (12) einerseits mit dem Verschiebeelement (100) und andererseits mit dem Fahrzeugsitzoberteil (3) verbunden ist.

## Claims

1. Vehicle seat (1) having a suspension unit (2) for cushioning the rolling and vertical movements of the vehicle seat (1), wherein the vehicle seat (1) has a vehicle seat upper part (3) and a vehicle seat lower part (4), wherein the vehicle seat upper part (3) and the vehicle seat lower part (4) are connected by means of the suspension unit (2) so that the vehicle seat upper part (3) and the vehicle seat lower part (4) are movable relative to one another, wherein the suspension unit (2) has a scissor arrangement (5) having a first scissor arm (6) and a second scissor arm (7), wherein
the suspension unit (2) is connected rotatably about a first axis of rotation (10) to the vehicle seat lower part (4) and comprises a spring element support (11) and a first spring element (12),
a displacement element (100) being provided which is mounted displaceably with respect to the vehicle seat lower part (4), and the first spring element (12) being connected on the one hand to the displacement element (100) and on the other hand to the spring element support (11), wherein the suspension unit (2) comprises a second spring element (13), the second spring element (13) being connected on the one hand to the displacement element (100) and on the other hand to the spring element support (11).

2. Vehicle seat (1) according to claim 1,
**characterised in that**
the first spring element (12) is arranged at a first angle (16) to a vehicle seat width direction (B) and at a second angle (17) to a vehicle seat height direction (H).

3. Vehicle seat (1) according to either claim 1 or claim 2,
**characterised in that**
the second spring element (13) is arranged at a third angle (18) to the vehicle seat width direction (B) and at a fourth angle (19) to the vehicle seat height direction (H).

4. Vehicle seat (1) according to any of claims 1 to 3,
**characterised in that**
the first axis of rotation (10) is defined by a shaft (20) which is rotatably connected to the vehicle seat lower part (4).

5. Vehicle seat (1) according to any of claims 1 to 4,
**characterised in that**
the displacement element (100) is flat and is translationally displaceable with respect to the vehicle seat lower part (4).

6. Vehicle seat (1) according to any of claims 1 to 5,
**characterised in that**
the displacement element (100) can be displaced relative to the vehicle seat lower part (4) by means of an actuator (101), the actuator (101) being connected on the one hand to the displacement element (100) and on the other hand to the vehicle seat lower part (4).

7. Vehicle seat (1) according to claim 6,
**characterised in that**
the actuator (101) is a mechanical actuator, an electrical actuator, a pneumatic actuator or a hydraulic actuator.

8. Vehicle seat (1) according to any of claims 1 to 7,
**characterised in that**
the spring element support (11) is rotatably connected about the second axis of rotation (14) to the first scissor arm (6) and rotatably connected about the third axis of rotation (15) to the second scissor arm (7).

9. Vehicle seat (1) according to claim 8,
**characterised in that**
the first axis of rotation (10) is parallel to a vehicle seat longitudinal direction (L), and wherein a second axis of rotation (14) and a third axis of rotation (15) are arranged extending in the vehicle seat width direction (B) and the second (14) and the third axis of rotation (15) are arranged parallel to each other.

10. Method for cushioning the rolling and vertical movements of a vehicle seat (1) according to any of claims 1 to 9,
wherein the method comprises the steps:
a) Determining a rolling deflection of the vehicle or of the vehicle seat lower part (4) or of a cab floor on which the vehicle seat (1) is arranged by means of an angle sensor;
b) Determining a displacement distance of the displacement element (100);
c) Controlling the actuator (101) so that the displacement element (100) is displaced by the displacement distance by means of an actuator movement.

11. Vehicle seat (1) having a suspension unit (2) for cushioning the rolling and vertical movements of the vehicle seat (1), wherein the vehicle seat (1) has a vehicle seat upper part (3) and a vehicle seat lower part (4), wherein the vehicle seat upper part (3) and the vehicle seat lower part (4) are connected by means of the suspension unit (2) so that the vehicle seat upper part (3) and the vehicle seat lower part (4) are movable relative to one another, wherein the suspension unit (2) has a scissor arrangement (5) having a first scissor arm (6) and a second scissor arm (7), wherein
the suspension unit (2) is connected rotatably about a first axis of rotation (10) to the vehicle seat lower part (4) and comprises a spring element support (11) and a first spring element (12),
a displacement element (100) being provided which is mounted displaceably with respect to the vehicle seat lower part (4), and the first spring element (12) being connected on the one hand to the displacement element (100) and on the other hand to the vehicle seat upper part (3).

## Revendications

1. Siège de véhicule (1) comportant une unité de suspension (2) pour l'amortissement de mouvements de roulis et verticaux du siège de véhicule (1), le siège de véhicule (1) présentant une partie supérieure de siège de véhicule (3) et une partie inférieure de siège de véhicule (4), la partie supérieure de siège de véhicule (3) et la partie inférieure de siège de véhicule (4) étant reliées au moyen de l'unité de suspension (2) de telle sorte que la partie supérieure de siège de véhicule (3) et la partie inférieure de siège de véhicule (4) sont déplaçables l'une par rapport à l'autre, l'unité de suspension (2) présentant un dispositif à ciseaux (5) ayant un premier bras de ciseaux (6) et un second bras de ciseaux (7),
dans lequel l'unité de suspension (2) est reliée de manière rotative autour d'un premier axe de rotation (10) à la partie inférieure de siège de véhicule (4) et comporte un support d'élément ressort (11) et un premier élément ressort (12),
dans lequel un élément de déplacement (100) est prévu, lequel est monté de manière déplaçable par rapport à la partie inférieure de siège de véhicule et dans lequel le premier élément ressort (12) est relié, d'une part, à l'élément de déplacement (100) et, d'autre part, au support d'élément ressort (11), dans lequel l'unité de suspension (2) comporte un second élément ressort (13), le second élément ressort (13) étant relié, d'une part, à l'élément de déplacement (100) et, d'autre part, au support d'élément ressort (11).

2. Siège de véhicule (1) selon la revendication 1,
**caractérisé par le fait que**
le premier élément ressort (12) est disposé à un premier angle (16) par rapport à une direction de largeur de siège de véhicule (B) et à un deuxième angle (17) par rapport à une direction de hauteur de siège de véhicule (H).

3. Siège de véhicule (1) selon l'une des revendications 1 ou 2,
**caractérisé par le fait que**
le second élément ressort (13) est disposé à un troisième angle (18) par rapport à la direction de largeur de siège de véhicule (B) et à un quatrième angle (19) par rapport à la direction de hauteur de siège de véhicule (H).

4. Siège de véhicule (1) selon l'une des revendications 1 à 3,
**caractérisé par le fait que**
le premier axe de rotation (10) est défini par un arbre (20), lequel est relié de manière rotative à la partie inférieure de siège de véhicule (4).

5. Siège de véhicule (1) selon l'une des revendications 1 à 4,
**caractérisé par le fait que**
l'élément de déplacement est réalisé de manière plane et est déplaçable en translation par rapport à la partie inférieure du siège de véhicule.

6. Siège de véhicule (1) selon l'une des revendications 1 à 5,
**caractérisé par le fait que**
l'élément de déplacement (100) est déplaçable au moyen d'un actionneur (101) par rapport à la partie inférieure de siège de véhicule (4), l'actionneur (101) étant relié, d'une part, à l'élément de déplacement (100) et, d'autre part, à la partie inférieure de siège de véhicule (4).

7. Siège de véhicule (1) selon la revendication 6,
**caractérisé par le fait que**
l'actionneur (101) est un actionneur mécanique, un actionneur électrique, un actionneur pneumatique ou un actionneur hydraulique.

8. Siège de véhicule (1) selon l'une des revendications 1 à 7,
**caractérisé par le fait que**
le support d'élément ressort (11) est relié de manière rotative autour d'un deuxième axe de rotation (14) au premier bras de ciseaux (6) et de manière rotative autour d'un troisième axe de rotation (15) au deuxième bras de ciseaux (7).

9. Siège de véhicule (1) selon la revendication 8,
**caractérisé par le fait que**
le premier axe de rotation (10) est parallèle à la direction longitudinale de siège de véhicule (L), et dans lequel le deuxième axe de rotation (14) et le troisième axe de rotation (15) sont disposés de manière à s'étendre dans la direction de largeur de siège de véhicule (B), et le deuxième (14) axe de rotation et le troisième axe de rotation (15) sont disposés parallèlement l'un à l'autre.

10. Procédé pour l'amortissement de mouvements de roulis et verticaux d'un siège de véhicule (1) selon l'une des revendications 1 à 9, le procédé comportant les étapes de procédé suivantes :
a) détermination d'une déviation de roulis du véhicule ou de la partie inférieure de siège de véhicule (4) ou d'un plancher de cabine, sur lequel le siège de véhicule (1) est disposé, au moyen d'un capteur angulaire ;
b) détermination d'une distance de déplacement de l'élément de déplacement (100) ;
c) commande de l'actionneur (101) de telle sorte qu'au moyen d'un mouvement d'actionneur, l'élément de déplacement (100) est déplacé de la distance de déplacement.

11. Siège de véhicule (1) comportant une unité de suspension (2) pour l'amortissement de mouvements de roulis et verticaux du siège de véhicule (1), le siège de véhicule (1) présentant une partie supérieure de siège de véhicule (3) et une partie inférieure de siège de véhicule (4), la partie supérieure de siège de véhicule (3) et la partie inférieure de siège de véhicule (4) étant reliées au moyen de l'unité de suspension (2) de telle sorte que la partie supérieure de siège de véhicule (3) et la partie inférieure de siège de véhicule (4) sont déplaçables l'une par rapport à l'autre, l'unité de suspension (2) présentant un dispositif à ciseaux (5) avec un premier bras de ciseaux (6) et un second bras de ciseaux (7),
dans lequel l'unité de suspension (2) est reliée de manière rotative autour d'un premier axe de rotation (10) à la partie inférieure de siège de véhicule (4) et comporte un support d'élément ressort (11) et un premier élément ressort (12),
dans lequel il est prévu un élément de déplacement (100), lequel est monté de manière déplaçable par rapport à la partie inférieure de siège de véhicule et dans lequel le premier élément ressort (12) est relié, d'une part, à l'élément de déplacement (100) et, d'autre part, à la partie supérieure de siège de véhicule (3).
